# EUROPÄISCHE PATENTANMELDUNG

(11) **EP 3 435 464 A1**
(43) Veröffentlichungstag der Anmeldung: **30.01.2019**
(21) Anmeldenummer: 17275118.2
(22) Anmeldetag: 28.07.2017
(51) Int. Cl.: H01M 8/18

(54) **REDOX-FLOW-BATTERIE UND VERFAHREN ZUM BETREIBEN EINER REDOX-FLOW-BATTERIE**

(71) Anmelder: Siemens Aktiengesellschaft, 80333 München (DE)
(72) Erfinder: Fleck, Robert, 91325 Adelsdorf (DE); Friedl, Jochen, Newcastle Upon Tyne, NE3 3NJ (GB); Schricker, Barbara, 91058 Erlangen (DE); Schwob, Matthäa, Newcastle upon Tyne, NE2 1TN (GB); Stimming, Ulrich, Newcastle upon Tyne, NE15 9JT (GB); Wolfschmidt, Holger, 91058 Erlangen (DE)

(57) **Zusammenfassung**

Die Erfindung betrifft ein Verfahren zum Betreiben einer elektrisch wiederaufladbaren Redox-Flow-Batterie und eine Redox-Flow-Batterie. Zunächst erfolgt das Bereitstellen einer Redox-Flow-Batterie umfassend eine erste Kammer und eine zweite Kammer, wobei die erste Kammer von der zweiten Kammer von einer Membran getrennt ist und wobei die erste Kammer eine Kathode umfasst und die zweite Kammer eine Anode umfasst. In die erste Kammer wird dann ein erster Elektrolyt als Katholyt geführt. In die zweite Kammer wird ein zweiter Elektrolyt als Anolyt geführt. Der erste Elektrolyt umfasst ein erstes Reduktions-Oxidations-Paar und der zweite Elektrolyt umfasst ein zweites Reduktions-Oxidations-Paar. Weiterhin umfassende erste und/oder der zweite Elektrolyt einen pHstabilisierenden Puffer zum chemischen stabilisieren des Reduktions-Oxidations-Paares. Die Redox-Flow-Batterie kann dann aufgeladen oder entladen werden.

## Beschreibung

Die Erfindung betrifft eine Redox-Flow-Batterie und ein Verfahren zum Betreiben einer Redox-Flow-Batterie.

Die Nachfrage nach Strom schwankt im tageszeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Batterien sind Speicher für elektrische Energie auf elektrochemischer Basis und geeignet, die überschüssige Energie zu speichern. Handelt es sich um einen wiederaufladbaren Speicher wird dieser auch Akkumulator genannt. Ein einzelnes wiederaufladbares Speicherelement wird auch Sekundärelement genannt.

Bei Redox-Flow-Batterien ist, im Unterschied zu klassischen Sekundärelementen, das elektrodenaktive Material flüssig. Dieser flüssige Elektrolyt wird in einem Tank gelagert und in einen Kathodenraum mit einer Kathode und/oder in einen Anodenraum mit einer Anode gepumpt. Kathodenraum und Anodenraum werden typischerweise durch eine Membran voneinander getrennt. An den Elektroden wird das elektrodenaktive Material reduziert, beziehungsweise oxidiert. Der flüssige Elektrolyt umfasst als elektrodenaktives Material zweckmäßigerweise ein Reduktions-Oxidations-Paar.

Der Elektrolyt umfasst typischerweise Salze, um eine ausreichend hohe Leitfähigkeit zwischen der Anode und der Kathode zu erreichen. Die Aktivität einiger neuer Reduktions-Oxidations-Paare, insbesondere Oxide von Übergangsmetallen, sinkt in diesen Elektrolyten über die Betriebsdauer, und damit nimmt auch die Kapazität der Redox-Flow-Batterie in diesen Elektrolyt-Systemen während des Betriebes der Redox-Flow-Batterie nachteilig ab.

Es ist daher Aufgabe der vorliegenden Erfindung eine Redox-Flow-Batterie und ein Verfahren zum Betreiben einer Redox-Flow-Batterie anzugeben, bei welcher die Aktivität des Reduktions-Oxidations-Paares, insbesondere neuer Reduktions-Oxidations-Paare wie Oxide von Übergangsmetallen, während des Betriebs erhalten bleibt.

Die Aufgabe wird mit einem Verfahren gemäß Anspruch 1 und einer Redox-Flow-Batterie gemäß Anspruch 10 gelöst.

Das erfindungsgemäße Verfahren zum Betreiben einer elektrisch wiederaufladbaren Redox-Flow-Batterie umfasst mehrere Schritte. Zunächst wird eine Redox-Flow-Batterie bereitgestellt. Die Redox-Flow-Batterie umfasst eine erste Kammer und eine zweite Kammer, wobei die erste Kammer von der zweiten Kammer von einer Membran getrennt ist. Die erste Kammer umfasst eine Kathode und die zweite Kammer umfasst eine Anode. In die erste Kammer wird ein erster Elektrolyt als Katholyt geführt. In die zweite Kammer wird ein zweiter Elektrolyt als Anolyt geführt. Der erste Elektrolyt umfasst ein erstes Reduktions-Oxidations-Paar. Der zweite Elektrolyt umfasst ein zweites Reduktions-Oxidations-Paar. Der erste und/oder zweite Elektrolyt umfassen weiterhin einen pH-stabilisierenden Puffer zum chemischen Stabilisieren des Reduktions-Oxidations-Paares. Die Redox-Flow-Batterie wird dann aufgeladen oder entladen.

Die erfindungsgemäße elektrisch wiederaufladbare Redox-Flow-Batterie umfasst eine erste und eine zweite Kammer, welche durch eine Membran getrennt sind, wobei die erste Kammer eine Kathode und die zweite Kammer eine Anode umfasst. Die erste Kammer weist einen ersten Elektrolyten als Katholyt auf und die zweite Kammer weist einen zweiten Elektrolyten als Anolyt auf. Der erste Elektrolyt umfasst ein erstes Reduktions-Oxidations-Paar und der zweite Elektrolyt umfasst ein zweites Reduktions-Oxidations-Paar. Der erste und/oder zweite Elektrolyt umfassen weiterhin einen pH-stabilisierenden Puffer zum chemischen Stabilisieren des Reduktions-Oxidations-Paares.

Einige Reduktions-Oxidations-Paare reagieren sehr empfindlich auf kleine pH-Veränderungen des Elektrolyten. Diese kleinen Veränderungen des pH-Werts, verursacht insbesondere durch Protonen und/oder Hydroxidionen, welche die Membran passieren, führen nachteilig zu einer Veränderung des Elektrolyten, welche zu einer Inaktivierung des Reduktions-Oxidations-Paares und somit zu einem Kapazitätsverlust der Redox-Flow-Batterie führt. Erfindungsgemäß weist das erfindungsgemäßen Verfahren und die erfindungsgemäße Redox-Flow-Batterie wenigstens einen Elektrolyten mit wenigstens einen pH-stabilisierenden Puffer auf. Vorteilhaft wird somit verhindert, dass das Reduktions-Oxidations-Paar während des Betriebs der Redox-Flow-Batterie sich derart chemisch verändert, dass die Aktivität und auch die Kapazität sinkt. In anderen Worten wird die Kapazität der Redox-Flow-Batterie länger konstant gehalten, was zu einer höheren Lebensdauer der Redox-Flow-Batterie führt und somit zu geringeren Betriebskosten führt.

In einer vorteilhaften Ausgestaltung und Weiterbildung der Erfindung wird wenigstens als das erste Reduktions-Oxidations-Paar ein Polyoxometallat verwendet.

Polyoxometallate ermöglichen das Einstellen gewünschter chemischer Eigenschaften dadurch, dass eine Vielzahl unterschiedlicher Metalle in die Struktur der Polyoxometalle eingebunden werden können. Insbesondere werden dadurch vorteilhaft sehr hohe Reaktionsraten in der Redox-Flow-Batterie erwartet. Insbesondere ist es vorteilhaft auch möglich, mehrstufige Elektronenübergänge an einem Polyoxometallat durchzuführen.

In einer weiteren vorteilhaften Ausgestaltung und Weiterbildung der Erfindung ist der pH-stabilisierende Puffer derart ausgestaltet, dass ein pH-Puffer-Bereich des Puffers einen elektrochemisch aktiven pH-Bereich des ersten und/oder zweiten Reduktions-Oxidations-Paares umfasst. Als elektrochemisch aktiven pH-Bereich wird der Bereich bezeichnet, in dem die Molekülstruktur des Reduktions-Oxidations-Paares aktiv, d.h. in der Weise vorliegt das es reduziert bzw. oxidiert werden kann. Vorteilhaft ist es so möglich, die Redox-Flow-Batterie individuell an ein bestimmtes Reduktions-Oxidations-Paar anzupassen. Die Erhaltung der Kapazität und die Lebensdauer werden somit vorteilhaft erreicht.

In einer weiteren vorteilhaften Ausgestaltung und Weiterbildung der Erfindung liegt der pH-Puffer-Bereich des Puffers in einem pH - Bereich von 1 bis 6. Insbesondere eignen sich Puffer, welche im sauren Bereich liegen. Insbesondere kann in diesem Bereich ein erster Puffer umfassend Salzsäure, Glycerin und Natriumchlorid eingesetzt werden. Der pH-Bereich dieses Puffers liegt in einem Bereich von 1 bis 3, 5. Alternativ kann in diesem Bereich ein zweiter Puffer umfassend Salzsäure und Kaliumhydrogenphthalat eingesetzt werden. Der pH-Bereich dieses Puffers liegt in einem Bereich von 2, 2 bis 3, 8. Alternativ kann in diesem pH-Bereich ein dritter Puffer umfassend Citronensäure und Natriumcitrat verwendet werden. Der Bereich dieses dritten Puffers liegt in einem Bereich von 3, 0 bis 6, 2. Weiterhin kann alternativ ein vierter Puffer umfassend Essigsäure und Natriumacetat eingesetzt werden. Der pH-Bereich des vierten Puffers liegt in einem Bereich von 3, 6 bis 5, 6. Alternativ kann ebenso ein fünfter Puffer umfassend Natriumhydroxid und Natriumhydrogenphthalat verwendet werden. Der Pufferbereich dieses Puffers liegt in einem pH-Bereich von 4, 2 bis 6, 0.

In einer weiteren vorteilhaften Ausgestaltung und Weiterbildung der Erfindung liegt der pH-Bereich des Puffers in einem Bereich von 6 bis 8. Insbesondere wird als der pH-stabilisierende Puffer dann ein sechster Puffer umfassend Natriumdihydrogenphosphat und Dinatriumhydrogenphosphat verwendet. Der pH-Bereich dieses Puffers liegt in einem Bereich von 5, 7 bis 8, 0.

In einer weiteren vorteilhaften Ausgestaltung und Weiterbildung der Erfindung liegt der pH-Bereich des Puffers in einem Bereich von 8 bis 12. Insbesondere wird als pHstabilisierender Puffer ein siebter Puffer umfassend Natriumtetraborat und Natriumhydroxid verwendet. Der pH-Bereich dieses Puffers liegt in einem Bereich von 9, 2 bis 10, 6. Alternativ kann in diesem Bereich ein achter Puffer umfassend Natriumcarbonat und Natriumbicarbonat verwendet werden. Der pH-Bereich dieses Puffers liegt in einem Bereich von 9, 2 bis 10, 7. Alternativ kann ein neunter Puffer umfassend Mononatriumsphosphat und Natriumhydroxid verwendet werden. Der pH-Bereich dieses Puffers liegt in einem Bereich von 11, 0 bis 11, 9.

In einer weiteren vorteilhaften Ausgestaltung und Weiterbildung der Erfindung umfasst die Redox-Flow-Batterie eine erste Pumpe zum Pumpen des Katholyts durch die erste Kammer und eine zweite Pumpe zum Pumpen des Anolyts durch die zweite Kammer. Durch das Pumpen des Elektrolyts lässt sich vorteilhaft die Kapazität der Redox-Flow-Batterie über die Flussgeschwindigkeit des Elektrolyts einstellen.

In einer weiteren vorteilhaften Ausgestaltung und Weiterbildung der Erfindung umfasst die Redox-Flow-Batterie einen ersten Vorlagetank mit dem ersten Elektrolyt, wobei der erste Vorlagetank mittels einer ersten Leitung mit der ersten Kammer verbunden ist. Die Redox-Flow-Batterie umfasst weiterhin einen zweiten Vorlagetank mit dem zweiten Elektrolyt, wobei der zweite Vorlagetank mittels einer zweiten Leitung mit der zweiten Kammer verbunden ist. Vorteilhaft kann über die Größe der Vorlagetanks die Menge des Elektrolyten variiert werden. Dadurch kann vorteilhaft das Energie- zu Leistungsverhältnis der Redox-Flow-Batterie angepasst werden. Weiterhin kann vorteilhaft die Größe des Vorlagetanks an die spezifische Kapazität der Redox-Flow-Batterie, welche als Amperestunden pro Liter Elektrolyt definiert ist (Einheit: Ah/1) angepasst werden.

Weitere Merkmale, Eigenschaften und Vorteile der vorliegenden Erfindung ergeben sich aus der nachfolgenden Beschreibung unter Bezugnahme der beiliegenden Figuren.
Figur 1 zeigt eine wiederaufladbare Redox-Flow-Batterie mit einem Elektrolyt mit Puffer;
Figur 2 zeigt eine schematische Übersicht über das Verfahren zum Betreiben der Redox-Flow-Batterie.

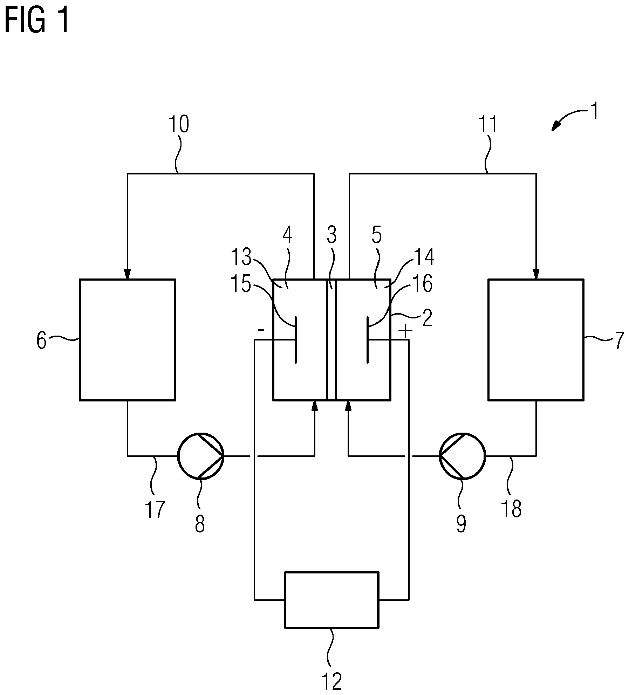

Figur 1 zeigt eine wiederaufladbare Redox-Flow-Batterie 1. Die wiederaufladbare Redox-Flow-Batterie 1 umfasst eine Redox-Flow-Einheit 2. Die Redox-Flow-Einheit 2 umfasst eine Membran 3, wobei die Membran 3 eine erste Kammer 4 und eine zweite Kammer 5 voneinander trennt. In der ersten Kammer 4 ist eine Kathode 15 angeordnet. In der zweiten Kammer 5 ist eine Anode 16 angeordnet. Die Kathode 15 und die Anode 16 sind über eine Elektroenergieanbindung 12 mit einem Stromnetz verbunden. Die wiederaufladbare Redox-Flow-Batterie 1 umfasst weiterhin einen ersten Tank 6 welcher mittels einer ersten Pumpe 8 über eine erste Leitung mit der ersten Kammer 4 mit der Kathode 15 verbunden ist. Die erste Kammer 4 ist wiederum über eine dritte Leitung 10 mit dem ersten Tank 6 verbunden. Die wiederaufladbare Redox-Flow-Batterie 1 umfasst einen zweiten Tank 7 der über eine zweite Pumpe 9 mit der zweiten Kammer 5 mit der Anode 16 über eine zweite Leitung verbunden ist. Die zweite Kammer 5 ist wiederum mit einer vierten Leitung 11 mit dem zweiten Tank 7 verbunden.

In der ersten Kammer 4 befindet sich ein erster Elektrolyt 13 mit einem Polyoxometallat als erstem Reduktions-Oxidations-Paar. Weiterhin befindet sich in der ersten Kammer in dem ersten Elektrolyt 13 ein Puffer. Als ein Puffer wird in diesem Beispiel ein Puffer umfassend Glycin und Natriumchlorid eingesetzt. In der zweiten Kammer 5 befindet sich ein zweiter Elektrolyt 14 umfassend Lithiumchlorid. Die Flussraten der ersten Pumpe 8 und der zweiten Pumpe 9 liegen in einem Bereich zwischen von 800 ml/min/m² bis 4000 ml/min/m², besonders bevorzugt in einem Bereich zwischen 1200 ml/min/m² und 3600 ml/min/m². Während des Betriebs der Redox-Flow-Batterie 1 bei Raumtemperatur bleibt das Reduktions-Oxidations-Paar Polyoxometallat aktiv und somit bleibt die Kapazität der Redox-Flow-Batterie 1 erhalten. Dies führt vorteilhaft zu einer langen Lebensdauer der Redox-Flow-Batterie 1.

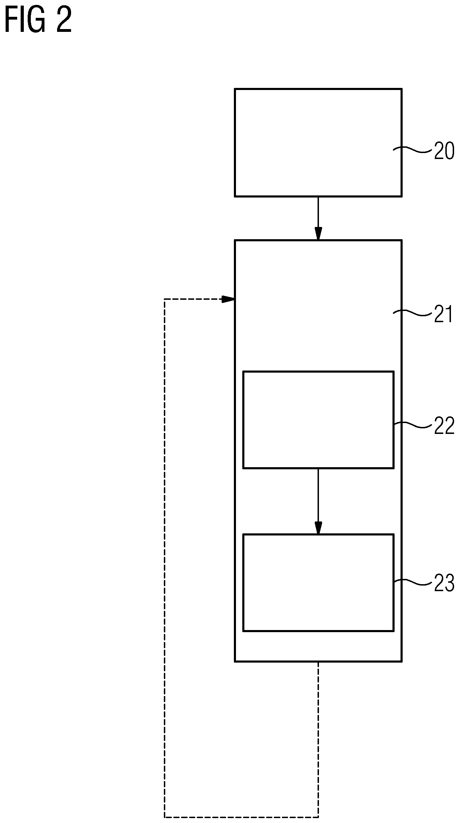

Figur 2 zeigt eine schematische Übersicht über das Verfahren zum Betreiben einer Redox-Flow-Batterie 1. Zunächst erfolgt das b
Bereitstellen der Redox-Flow-Batterie 20. Dann wird der erste und zweite Elektrolyt in die erste Kammer 4 und in die zweite Kammer 5 geführt. Dies geschieht kontinuierlich während des Betriebs der Redox-Flow-Batterie 1. Daher ist dieser Schritt in der Figur 2 mit einer die Verfahrensschritte 22 und 23 umfassenden Box 21 dargestellt. Das Aufladen der Redox-Flow-Batterie 22 erfolgt bevor die Redox-Flow-Batterie 1 entladen 23 werden kann. Das Aufladen 22 und Entladen 23 kann typischerweise als Kreisprozess ausgeführt werden.

## Patentansprüche

1. Verfahren zum Betreiben einer elektrisch wiederaufladbaren Redox-Flow-Batterie (1) mit den folgenden Schritten:
- Bereitstellen einer Redox-Flow-Batterie (1) umfassend eine erste Kammer (4) und eine zweite Kammer (5), wobei die erste Kammer (4) von der zweiten Kammer (5) von einer Membran (3) getrennt ist und wobei die erste Kammer (4) eine Kathode (15) umfasst und die zweite Kammer (5) eine Anode (16) umfasst,
- Führen eines ersten Elektrolyten (13) als Katholyt in die erste Kammer (4) und Führen eines zweiten Elektrolyten (14) als Anolyt in die zweite Kammer (5), wobei der erste Elektrolyt (13) ein erstes Reduktions-Oxidations-Paar umfasst und der zweite Elektrolyt (14) ein zweites Reduktions-Oxidations-Paar umfasst und der erste und/oder zweite Elektrolyt einen pH stabilisierenden Puffer zum chemischen Stabilisieren des Reduktions-Oxidations-Paares umfasst,
- Aufladen oder Entladen der Redox-Flow-Batterie (1).

2. Verfahren nach einem der vorhergehenden Ansprüche, wobei wenigstens als das erste Reduktions-Oxidations-Paar ein Polyoxometallat verwendet wird.

3. Verfahren nach Anspruch 1 oder 2, wobei der Puffer derart ausgestaltet ist, dass ein pH-Puffer-Bereich des Puffers einen elektrochemisch aktiven pH-Bereich des ersten und/oder zweiten Reduktions-Oxidations-Paares umfasst.

4. Verfahren nach Anspruch 3, wobei ein Puffer mit dem pH-Puffer-Bereich in einem pH -Bereich von 1 bis 6 verwendet wird.

5. Verfahren nach Anspruch 3, wobei ein Puffer mit dem pH-Puffer-Bereich in einem pH -Bereich von 6 bis 8 verwendet wird.

6. Verfahren nach Anspruch 3, wobei ein Puffer mit dem pH-Puffer-Bereich in einem pH -Bereich von 8 bis 12 verwendet wird.

7. Verfahren nach einem der Ansprüche 1 bis 4, wobei als der pH stabilisierende Puffer ein erster Puffer umfassend Salzsäure, Glycin und Natriumchlorid, ein zweiter Puffer umfassend Salzsäure und Kaliumhydrogenphthalat, ein dritter Puffer umfassend Citronensäure und Natriumcitrat, ein vierter Puffer umfassend Essigsäure und Natriumacetat oder ein fünfter Puffer umfassend Natriumhydroxid und Natriumhydrogenphthalat verwendet wird.

8. Verfahren nach einem der Anspruch 1 bis 3 oder 5, wobei als der pH stabilisierende Puffer ein sechster Puffer umfassend Natriumdihydrogenphosphat und Dinatriumhydrogenphosphat verwendet wird.

9. Verfahren nach einem der Ansprüche 1 bis 3 oder 6, wobei als der pH stabilisierende Puffer ein siebter Puffer umfassend Natriumtetraborat und Natriumhydroxid, ein achter Puffer umfassend Natriumcarbonat und Natriumbicarbonat oder ein neunter Puffer umfassend Mononatriumphophat und Natriumhydroxid verwendet wird.

10. Elektrisch wiederaufladbare Redox-Flow-Batterie (1) umfassend eine erste Kammer (4) und zweite Kammer (5) getrennt durch eine Membran (3), wobei die erste Kammer (4) eine Kathode (15) und die zweite Kammer (5) eine Anode (16) umfasst, und die erste Kammer (4) einen ersten Elektrolyten (13) als Katholyt aufweist und die zweite Kammer (5) einen zweiten Elektrolyten (14) als Anolyt aufweist, wobei der erste Elektrolyt (13) ein erstes Reduktions-Oxidations-Paar aufweist und der zweite Elektrolyt (14) ein zweites Reduktions-Oxidations-Paar aufweist und der erste und/oder zweite Elektrolyt (13, 14) einen pH stabilisierenden Puffer zum chemischen Stabilisieren des Reduktions-Oxidations-Paares umfasst.

11. Redox-Flow-Batterie (1) nach Anspruch 10 mit einer ersten Pumpe (8) zum Pumpen des Katholyts durch die erste Kammer (4) und einer zweiten Pumpe (9) zum Pumpen des Anolyts durch die zweite Kammer (5).

12. Redox-Flow-Batterie (1) nach einem der Ansprüche 10 oder 11 mit einem ersten Vorlagetank (6) mit dem ersten Elektrolyt (13), wobei der erste Vorlagetank (6) mittels einer ersten Leitung (17) mit der ersten Kammer (4) verbunden ist und mit einem zweiten Vorlagetank (7) mit dem zweiten Elektrolyt (14), wobei der zweite Vorlagetank (7) mittels einer zweiten Leitung (18) mit der zweiten Kammer (5) verbunden ist.
